# EUROPÄISCHE PATENTANMELDUNG

(11) **EP 2 026 432 A2**
(43) Veröffentlichungstag der Anmeldung: **18.02.2009**
(21) Anmeldenummer: 07024708.5
(22) Anmeldetag: 20.12.2007
(51) Int. Cl.: H02B 13/035, H01H 33/66, H01H 33/00, H01H 31/00, H01H 31/32

(54) **Schaltermodul für eine elektrische Schaltanlage**

(30) Priorität: 29.11.2006 DE 102006056655
(71) Anmelder: AREVA Energietechnik GmbH, 93001 Regensburg (DE)
(72) Erfinder: Starck, Thierry, Dipl.-Ing., 2492 MZ Den Haag (NL)
(74) Vertreter: Schäfer, Wolfgang

(57) **Zusammenfassung**

Es wird ein Schaltermodul (10) für eine elektrische Schaltanlage, insbesondere für eine Mittelspannungsschaltanlage beschrieben. Das Schaltermodul (10) ist mit einem Gehäuse (11) versehen, in dem ein Dreistellungsschalter untergebracht ist, und das mit einer Isolierflüssigkeit (27) gefüllt ist. Das Gehäuse (11) besteht aus einem Isolierstoff.

## Beschreibung

Die Erfindung betrifft ein Schaltermodul für eine elektrische Schaltanlage nach dem Oberbegriff des Anspruchs 1.

Ein derartiges Schaltermodul ist aus der DE 35 28 770 A1 bekannt. Dort ist ein Dreistellungsschalter und ein Leistungsschalter in einem Gehäuse untergebracht. Das Gehäuse ist gasdicht verschlossen und mit einem Isoliergas oder mit einer Isolierflüssigkeit gefüllt. Der Dreistellungsschalter und der Leistungsschalter sind elektrisch in Serie geschaltet und können von außen betätigt werden. Als Leistungsschalter ist eine Vakuumschaltkammer vorgesehen.

Aufgabe der Erfindung ist es, ein Schaltermodul für eine elektrische Schaltanlage zu schaffen, das einen möglichst kompakten Aufbau besitzt.

Die Erfindung löst diese Aufgabe durch ein Schaltermodul für eine elektrische Schaltanlage nach dem Anspruch 1.

Das erfindungsgemäße Schaltermodul ist mit einem Gehäuse versehen, in dem ein Dreistellungsschalter und/oder ein Leistungsschalter untergebracht sind/ist. Das Gehäuse ist mit einer Isolierflüssigkeit gefüllt. Weiterhin besteht das Gehäuse aus einem Isolierstoff.

Durch diese Ausgestaltung des erfindungsgemäßen Schaltermoduls können die elektrischen Kontaktteile des Dreistellungsschalters und/oder der Leistungsschalters sehr kompakt in dem Gehäuse des Schaltermoduls untergebracht werden.

Weiterhin benötigt das erfindungsgemäße Schaltermodul kein umweltschädliches SF6-Gas, wobei gleichzeitig die Spannungsfestigkeit der Isolierflüssigkeit wesentlich größer ist als von SF6-Gas.

Das erfindungsgemäße Schaltermodul kann weiterhin derart ausgebildet werden, dass Umwelteinflüsse, wie Feuchtigkeit, Staub und dergleichen, keinen Einfluss auf die Funktionsfähigkeit ausüben können.

Die kompakte Bauweise des erfindungsgemäßen Schaltermoduls bringt den weiteren Vorteil mit sich, dass nur wenig Isolierflüssigkeit erforderlich ist, was mit einem geringen Brandrisiko verbunden ist.

Die einpolige Ausgestaltung des erfindungsgemäßen Schaltermoduls hat eine hohe Betriebssicherheit zur Folge Weiterhin ist es möglich, das Schaltermodul als Dreistellungsschalter oder als Leistungsschalter auszubilden und dann diese beiden Module beliebig miteinander zu kombinieren. Auf diese Weise können eine Vielzahl von Varianten von elektrischen Schaltanlagen zusammengestellt werden.

Bei einer vorteilhaften Weiterbildung der Erfindung weisen die metallischen Kontaktteile des Dreistellungsschalters und/oder des Leistungsschalters einen Abstand zu dem Gehäuse auf, wobei in dem durch den Abstand gebildeten Bereich die Isolierflüssigkeit vorhanden ist. Durch die hohe Spannungsfestigkeit der Isolierflüssigkeit kann dieser Abstand auf ein Minimum reduziert und das gesamte Schaltermodul sehr kompakt ausgebildet werden.

Bei einer weiteren vorteilhaften Weiterbildung der Erfindung weisen die metallischen Kontaktteile des Dreistellungsschalters und/oder des Leistungsschalters einen Abstand zueinander auf, wobei in dem durch den Abstand gebildeten Bereich die Isolierflüssigkeit vorhanden ist. Durch die hohe Spannungsfestigkeit der Isolierflüssigkeit kann dieser Abstand auf ein Minimum reduziert und das gesamte Schaltermodul sehr kompakt ausgebildet werden.

Bei einer vorteilhaften Ausgestaltung der Erfindung weist der Dreistellungsschalter ein metallisches Verbindungsteil auf, das mit einer Stange gekoppelt ist, und das durch eine Betätigung der Stange mit den elektrischen Kontaktteilen des Dreistellungsschalters in eine elektrische Verbindung bringbar ist. Dies stellt eine besonders einfache und kompakte Realisierung des Dreistellungsschalters dar.

Bei einer anderen vorteilhaften Ausgestaltung der Erfindung weist der Leistungsschalter eine Vakuumschaltkammer auf. Vorzugsweise ist der bewegliche Anschluss der Vakuumschaltkammer mit einem metallischen Gleitkontakt gekoppelt, der mit einem der metallischen Kontaktteile des Leistungsschalters elektrisch verbunden ist. Auf diese Weise wird ein besonders einfacher Aufbau des Leistungsschalters erreicht. Der Gleitkontakt kann dabei in einem Innenraum untergebracht sein, in dem keine Isolierflüssigkeit vorhanden ist. Damit hat die Isolierflüssigkeit keinen Einfluss auf die Betätigung des Leistungsschalters.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

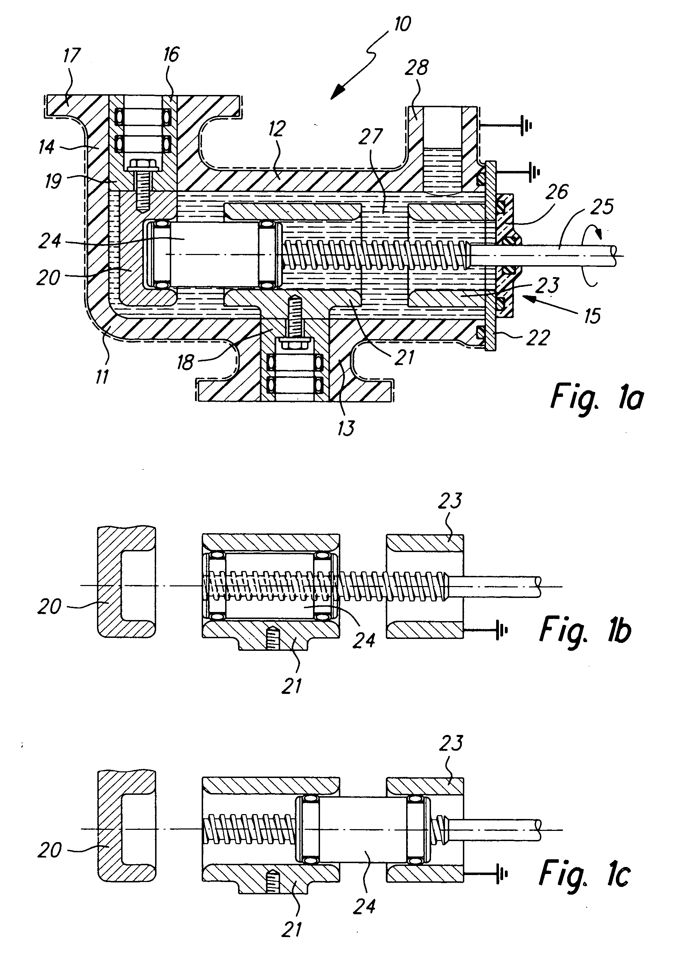

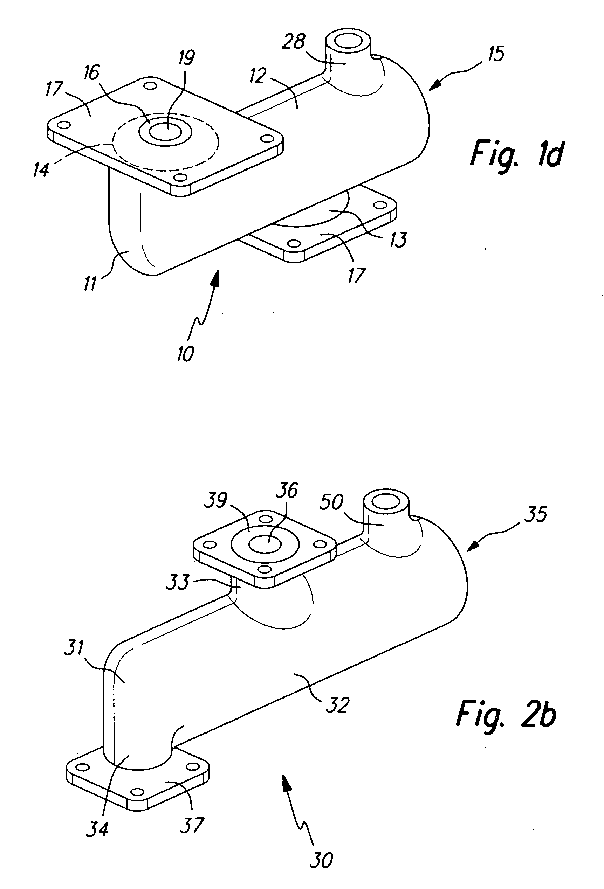

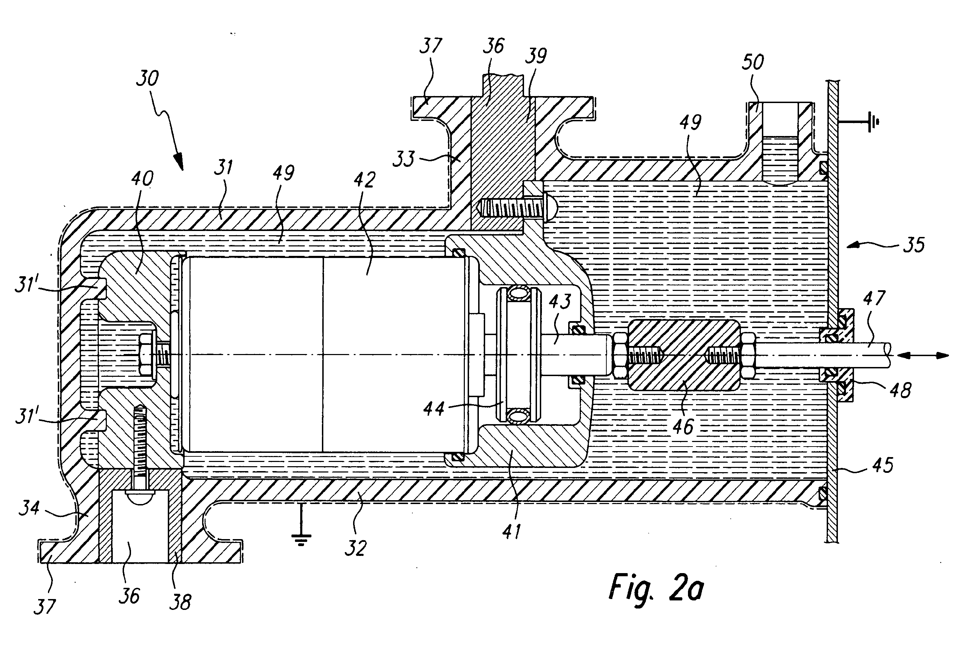

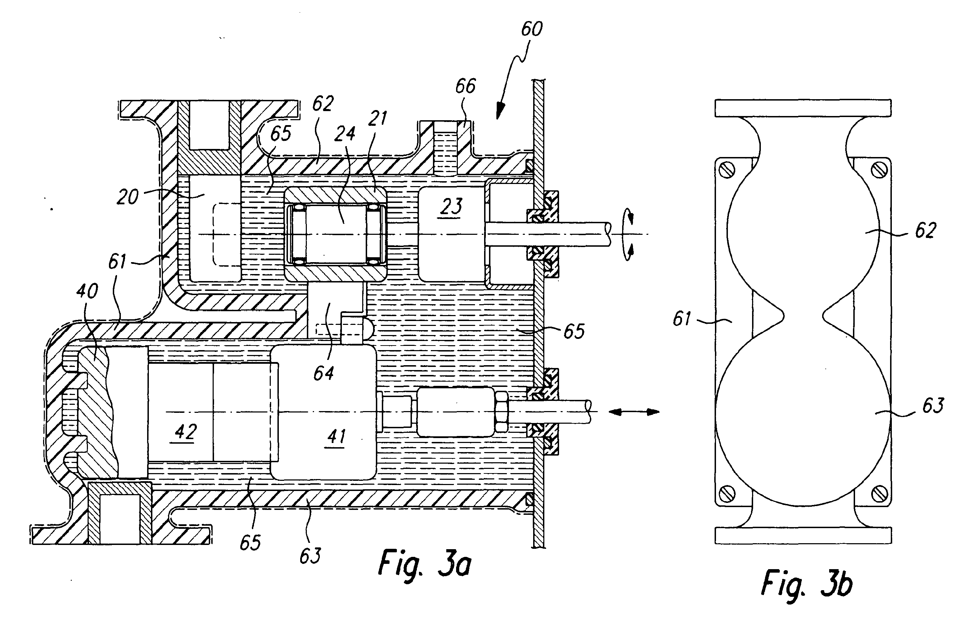

Figur 1a zeigt eine schematische Schnittdarstellung eines ersten Ausführungsbeispiels eines erfindungsgemäßen Schaltermoduls für eine elektrische Schaltanlage in einer Ein-Stellung, Figuren 1b und 1c zeigen eine schematische Darstellung des Schaltermoduls der Figur 1a in einer Aus-Stellung und einer geerdeten Stellung, Figur 1d zeigt eine schematische Perspektivdarstellung des Schaltermoduls der Figur 1a, Figur 2a zeigt eine schematische Schnittdarstellung eines zweiten Ausführungsbeispiels eines erfindungsgemäßen Schaltermoduls für eine elektrische Schaltanlage, Figur 2b zeigt eine schematische Perspektivdarstellung des Schaltermoduls der Figur 2a, Figur 3a zeigt eine schematische Schnittdarstellung eines dritten Ausführungsbeispiels eines erfindungsgemäßen Schaltermoduls für eine elektrische Schaltanlage, und Figur 3b zeigt eine schematische Seitenansicht des Schaltermoduls der Figur 3a.

In den Figuren 1a bis 1d ist ein Schaltermodul 10 dargestellt, das in einer elektrischen Schaltanlage, insbesondere in einer Mittelspannungsschaltanlage zur Anwendung kommen kann. Bei dem Schaltermodul 10 handelt es sich um einen einpoligen Dreistellungsschalter, wobei in der Figur 1a die Ein-Stellung, in der Figur 1b die Aus- oder Trennstellung und in der Figur 1c die geerdete Stellung gezeigt ist.

Das Schaltermodul 10 weist ein Gehäuse 11 auf, das aus einem isolierenden Material besteht. Vorzugsweise ist das Gehäuse 11 aus einem Gießharz gegossen oder aus einem Thermoplast gespritzt.

Das Gehäuse 11 weist einen im wesentlichen zylindrischen Grundkörper 12 mit einer Längsachse auf, von dem zwei im wesentlichen zylindrische Abgänge 13, 14 in einander entgegengesetzte Richtungen jeweils etwa rechtwinklig abstehen. Der Abgang 13 ist in Richtung der Längsachse etwa mittig an dem Grundkörper 12 angeordnet, während der Abgang 14 an einem Ende des Grundkörpers 12 angeordnet ist. An diesem Ende ist der Grundkörper 12 in Richtung der Längsachse verschlossen, während das entgegengesetzte Ende des Grundkörpers 12 eine Öffnung 15 aufweist. Die Abgänge 13, 14 weisen jeweils eine Öffnung 16 auf und sind nach außen jeweils mit einem Flansch 17 versehen. Das Innere des Gehäuses 11 sowie das Innere der Abgänge 13, 14 ist hohl, wobei das Gehäuse 11 und die Abgänge 13, 14 überall eine im wesentlichen gleiche Wandstärke aufweisen.

Im Bereich der Abgänge 13, 14 ist jeweils ein metallisches Kontaktstück 18, 19 in das Gehäuse 11 eingegossen. Die Kontaktstücke 18, 19 sind von außen zugänglich, so dass sie von außen mit anderen elektrischen Komponenten verbunden werden können. Mit dem am Ende des Grundkörpers 12 angeordneten Kontaktstück 19 ist ein metallisches Kontaktteil 20 verschraubt, das im wesentlichen als topfförmige Ausnehmung ausgebildet ist. Die Ausnehmung des Kontaktteils 20 ist etwa koaxial zu der Längsachse ausgerichtet und in Richtung zu dem anderen Ende des Grundkörpers 20 geöffnet. Mit dem etwa mittig am Grundkörper 12 angeordneten Kontaktstück 18 ist ein metallisches Kontaktteil 21 verschraubt, das rohrförmig ausgebildet und etwa koaxial zu der Längsachse ausgerichtet ist.

Die Öffnung 15 ist von einer metallischen Platte 22 flüssigkeitsdicht verschlossen. Hierzu können Dichtungen zwischen dem Gehäuse 11 und der Platte 22 vorhanden sein. Die Platte 22 ist geerdet. Von der Platte 22 steht ein metallisches Kontaktteil 23 in das Innere des Grundkörpers 12 ab. Das Kontaktteil 23 ist im wesentlichen rohrförmig ausgebildet und etwa koaxial zu der Längsachse ausgerichtet. Etwa koaxial zur Längsachse weist die Platte 22 eine Öffnung auf.

Die Ausdehnung der Kontaktteile 20, 21, 23 in Richtung der Längsachse ist etwa derart gewählt, dass zwischen den Kontaktteilen 20, 21 einerseits und zwischen den Kontaktteilen 21, 23 andererseits ein etwa gleich großer Abstand vorhanden ist. Weiterhin weisen die Kontaktteile 20, 21, 23 jeweils einen etwa gleich großen Abstand von dem Gehäuse 11 auf.

Im Inneren des Grundkörpers 12 ist ein im wesentlichen zylindrisches, metallisches Verbindungsteil 24 vorhanden, das etwa koaxial zur Längsachse ausgerichtet ist. Der Innendurchmesser der Kontaktteile 20, 21, 23 ist geringfügig größer als der Außendurchmesser des Verbindungsteils 24. Damit kann das Verbindungsteil in Richtung der Längsachse im Inneren des Grundkörpers 12 verschoben werden, und zwar durch das Kontaktteil 21 hindurch in beide Richtungen einerseits bis in die Ausnehmung des Kontaktteils 20 und andererseits bis in den Bereich des Kontaktteils 23. Die Ausdehnung des Verbindungsteils 24 in Richtung der Längsachse ist etwa derart gewählt, dass das Verbindungsteil 24 einerseits in der in der Figur 1a gezeigten Ein-Stellung mit dem Kontaktteil 20 und dem Kontaktteil 21 überlappt, und andererseits in der in der Figur 1c gezeigten geerdeten Stellung mit dem Kontaktteil 21 und dem Kontaktteil 23 überlappt. Weiterhin sind die Ausdehnungen des Kontaktteils 21 und des Verbindungsteils 24 in Richtung der Längsachse etwa derart gewählt, dass das Kontaktteil 21 länger oder höchstens gleich lang wie das Verbindungsteil 24 ist. Damit kann das Verbindungsteil 24 in der in der Figur 1b gezeigten Aus-Stellung vollständig in das Kontaktteil 21 eintauchen.

Das Verbindungsteil 24 ist an seinen beiden freien Enden mit jeweils einem in einer Umfangsnut eingelassenen Kontaktelement versehen, das geringfügig über die Umfangsfläche des Verbindungsteils 24 übersteht und beispielsweise federnde Eigenschaften besitzt. Damit entsteht in der in der Figur 1a gezeigten Ein-Stellung ein elektrischer Kontakt von dem Kontaktstück 18 über das Kontaktteil 21, über das Verbindungsteil 24 und über das Kontaktteil 20 zu dem Kontaktstück 19. Entsprechend entsteht in der in der Figur 1c gezeigten geerdeten Stellung ein elektrischer Kontakt von dem Kontaktstück 18 über das Kontaktteil 21, über das Verbindungsteil 24 und über das Kontaktteil 23 zu der geerdeten Platte 22. In der in der Figur 1b gezeigten Aus-Stellung befindet sich das Verbindungsteil 24 im Bereich des Kontaktteils 21. Damit hat das Kontaktstück 18 keinen elektrischen Kontakt zu dem Kontaktstück 19 und auch keinen elektrischen Kontakt zu der geerdeten Platte 22.

Das Verbindungsteil 24 ist mit einer Stange 25 gekoppelt, wobei die Stange 25 aus einem isolierenden Material besteht. Die Stange 25 ist etwa koaxial zur Längsachse des Grundkörpers 12 ausgerichtet und durch die Öffnung der Platte 22 nach außen geführt. Von außen ist auf die Platte 22 eine Halterung 26 flüssigkeitsdicht aufgesetzt. Die Halterung weist eine etwa koaxial zur Längsachse ausgerichtete Bohrung auf, in der die Stange 25 geführt ist. Die Halterung kann aus einem vorzugsweise durchsichtigen Kunststoff bestehen, so dass eine Einsehbartkeit des Dreistellungsschalters von außen möglich ist. Ergänzend können zwischen der Halterung 26 und der Platte 22 sowie zwischen der Halterung 26 und der Stange 25 Dichtungen vorgesehen sein.

Bei der Stange 25 kann es sich um eine Schubstange handeln, so dass eine Betätigung der Stange 25 in Richtung der Längsachse zu einem Verschieben des Verbindungsteils 24 zwischen den in den Figuren 1a bis 1c gezeigten Stellungen führt. Alternativ kann es sich bei der Stange 25 um eine Spindelstange handeln, die in ein Innengewinde des Verbindungsteils 24 eingreift. Ein Drehen der Stange 25 führt dann zu dem vorgenannten Verschieben des Verbindungsteils 24. Letztere Ausführungsform ist in den Figuren 1a bis 1c angedeutet.

Das Innere des Gehäuses 11 ist mit einer Isolierflüssigkeit 27 vollständig gefüllt. Vorzugsweise besitzt die Isolierflüssigkeit 27 eine möglichst hohe Durchschlagsfestigkeit gegen Spannungen, eine niedrige Viskosität, eine geringe Brennbarkeit und eine hohe Verträglichkeit mit den im Inneren des Gehäuses 11 vorhandenen Materialien. Beispielsweise kann als Isolierflüssigkeit 27 Silikonöl oder eine Transformatorenisolierflüssigkeit auf der Basis von synthetischem Ester verwendet werden. Durch die Isolierflüssigkeit 27 wird - zusätzlich zu dem erläuterten Abstand - eine Isolation der Kontaktteile 20, 21, 23 zueinander erreicht. Weiterhin wird durch die Isolierflüssigkeit 27 - zusätzlich zu dem erläuterten Abstand - einer Isolation der Kontaktteile 20, 21, 23 zu dem Gehäuse 11 erreicht.

In seiner in vertikaler Richtung vorhandenen Oberseite ist an dem Grundkörper 12 ein Ausgleichsraum 28 angebracht. Das Innere des Ausgleichsraums 28 ist mit dem Inneren des Gehäuses 11 verbunden und damit mit der Isolierflüssigkeit 27 zumindest teilweise gefüllt. Der Pegel der Isolierflüssigkeit 27 liegt dabei höher als die höchstgelegene Innenfläche des Gehäuses 11. Der Ausgleichsraum 28 kann oben offen sein, so dass die Isolierflüssigkeit kontrolliert und gegebenenfalls nachgefüllt werden kann. Damit keine Feuchtigkeit eindringen kann, kann am Ausgang des Ausgleichsraums 28 eine Dampfsperre vorgesehen sein. Alternativ kann der Ausgleichsraum 28 auch von einem Balg luftdicht verschlossen sein. Der Balg ermöglicht dabei eine wärmebedingte Ausdehnung der Isolierflüssigkeit 27, ohne dass sich der Druck auf die Isolierflüssigkeit 27 wesentlich ändert.

Die Oberfläche des Gehäuses 11 ist mit einer Metallisierung oder einem Leitlack versehen und geerdet.

In den Figuren 2a und 2b ist ein Schaltermodul 30 dargestellt, das in einer elektrischen Schaltanlage, insbesondere in einer Mittelspannungsschaltanlage zur Anwendung kommen kann. Bei dem Schaltermodul 30 handelt es sich um einen einpoligen Leistungsschalter.

Das Schaltermodul 30 weist ein Gehäuse 31 auf, das aus einem isolierenden Material besteht. Vorzugsweise ist das Gehäuse 31 aus einem Gießharz gegossen oder aus einem Thermoplast gespritzt.

Das Gehäuse 31 weist einen im wesentlichen zylindrischen Grundkörper 32 mit einer Längsachse auf, von dem zwei im wesentlichen zylindrische Abgänge 33, 34 in einander entgegengesetzte Richtungen jeweils etwa rechtwinklig abstehen. Der Abgang 33 ist in Richtung der Längsachse etwa mittig an dem Grundkörper 32 angeordnet, während der Abgang 34 an einem Ende des Grundkörpers 32 angeordnet ist. An diesem Ende ist der Grundkörper 32 in Richtung der Längsachse verschlossen, während das entgegengesetzte Ende des Grundkörpers 32 eine Öffnung 35 aufweist.

Alternativ ist es auch möglich, den Abgang 34 nicht rechtwinklig abstehend, sondern am Ende des Grundkörpers 32 anzuordnen, und zwar etwa koaxial zur Richtung der Längsachse.

Die Abgänge 33, 34 weisen jeweils eine Öffnung 36 auf und sind nach außen jeweils mit einem Flansch 37 versehen. Das Innere des Gehäuses 31 sowie das Innere der Abgänge 33, 34 ist hohl, wobei das Gehäuse 31 und die Abgänge 33, 34 überall eine im wesentlichen gleiche Wandstärke aufweisen.

Im Bereich der Abgänge 33, 34 ist jeweils ein metallisches Kontaktstück 38, 39 in das Gehäuse 31 eingegossen. Die Kontaktstücke 38, 39 sind von außen zugänglich, so dass sie von außen mit anderen elektrischen Komponenten verbunden werden können. Mit dem am Ende des Grundkörpers 32 angeordneten Kontaktstück 38 ist ein metallisches Kontaktteil 40 verschraubt, das scheibenförmig ausgebildet ist. Mit dem etwa mittig am Grundkörper 12 angeordneten Kontaktstück 39 ist ein metallisches Kontaktteil 41 verschraubt, das eine topfförmig Ausnehmung aufweist, die etwa koaxial zu der Längsachse ausgerichtet und in Richtung zu dem Kontaktteil 40 geöffnet ist.

Zwischen den beiden Kontaktteilen 40, 41 ist eine Vakuumschaltkammer 42 angeordnet, die im wesentlichen zylindrisch ausgebildet und in Richtung der Längsachse des Grundkörpers 32 ausgerichtet ist. Die Umfangsfläche der Vakuumschaltkammer 42 besteht aus einem isolierenden Material, beispielsweise aus Keramik. Der Festanschluss der Vakuumschaltkammer 42 ist mit dem Kontaktteil 40 verschraubt, wobei vom Gehäuse 31 abstehende Rippen 31' zur Fixierung des Kontaktteils 40 sowie zur Aufnahme von Kontaktdruckkräften im eingeschalteten Zustand vorhanden sein können. Abgesehen von diesen Rippen 31' ist zwischen den Kontaktteilen 40, 41 und dem Gehäuse 31 ein etwa gleichbleibend großer Abstand vorhanden. Entsprechendes gilt für die Vakuumschaltkammer 42.

Der bewegliche Anschluss ist von einer Stange 43 gebildet und steht etwa koaxial zur Längsachse ausgerichtet aus der Vakuumschaltkammer 42 heraus. Das Kontaktteil 41 liegt an seinem freien Rand entlang des gesamten Umfangs mit der Innenfläche flüssigkeitsdicht an der Außenfläche der Vakuumschaltkammer 42 an. Ergänzend können hierzu beispielsweise Ringdichtungen vorhanden sein. Weiterhin weist das Kontaktteil 41 im Bereich seines Bodens eine Bohrung auf, die etwa koaxial zur Längsachse ausgerichtet ist, und deren Durchmesser etwa dem Durchmesser der Stange 43 entspricht. Durch diese Bohrung ist die Stange 43 flüssigkeitsdicht hindurchgeführt. Ergänzend können hierzu Dichtungen vorgesehen sein.

Im Bereich der Ausnehmung des Kontaktteils 41 ist auf der Stange 43 ein metallischer Gleitkontakt 44 befestigt, der etwa scheibenförmig ausgebildet ist, und dessen freier Umfang einen Durchmesser aufweist, der nur geringfügig kleiner ist als der Durchmesser der Innenfläche des Kontaktteils 41. An dem freien Umfang des Gleitkontakts 44 ist in einer Umfangsnut ein Kontaktelement eingelassen, das geringfügig über den Umfang des Gleitkontakts 44 übersteht und beispielsweise federnde Eigenschaften besitzt.

Die Öffnung 35 ist von einer metallischen Platte 45 flüssigkeitsdicht verschlossen. Hierzu können Dichtungen zwischen dem Gehäuse 31 und der Platte 45 vorhanden sein. Die Platte 45 weist in einem etwa koaxialen Bereich eine Öffnung auf und ist geerdet.

Die Stange 43 des Vakuumschalters 42 ist über ein Isolierteil 46 fest mit einer Stange 47 verbunden, wobei die Stange 47 etwa koaxial zur Längsachse des Grundkörpers 32 ausgerichtet und durch die Öffnung der Platte 45 nach außen geführt ist. Vorzugsweise kann die Stange 47 aus einem metallischen Material bestehen. Von außen ist auf die Platte 45 eine Halterung 48 flüssigkeitsdicht aufgesetzt. Die Halterung 48 weist eine etwa koaxial zur Längsachse ausgerichtete Bohrung auf, in der die Stange 47 geführt ist. Die Halterung 48 kann aus einem Kunststoff bestehen. Ergänzend können zwischen der Halterung 48 und der Platte 45 sowie zwischen der Halterung 48 und der Stange 47 Dichtungen vorgesehen sein.

Das Kontaktstück 38 ist über das Kontaktteil 40 elektrisch mit dem Festanschluss der Vakuumschaltkammer 42 verbunden. Weiterhin ist der bewegliche Anschluss der Vakuumschaltkammer 42, also die Stange 43, über den Gleitkontakt 44 und über das Kontaktteil 41 elektrisch mit dem Kontaktstück 39 verbunden. Die Stange 43 und damit der bewegliche Anschluss kann über das Isolierteil 46 und die Stange 47 von außen in Richtung der Längsachse betätigt werden. Damit kann der in der Vakuumschaltkammer enthaltene Leistungsschalter zwischen seiner Ein- und Ausstellung hin- und hergeschaltet werden.

Abgesehen von dem Innenraum der Ausnehmung des Kontaktteils 41 ist das Innere des Gehäuses 31 mit einer Isolierflüssigkeit 49 vollständig gefüllt. Vorzugsweise besitzt die Isolierflüssigkeit 49 eine möglichst hohe Durchschlagsfestigkeit gegen Spannungen, eine niedrige Viskosität, eine geringe Brennbarkeit und eine hohe Verträglichkeit mit den im Inneren des Gehäuses 31 vorhandenen Materialien. Beispielsweise kann als Isolierflüssigkeit 49 Silikonöl oder eine Transformatorenisolierflüssigkeit auf der Basis von synthetischem Ester verwendet werden. Durch die Isolierflüssigkeit 49 wird eine Isolation der Kontaktteile 40, 41 zueinander erreicht. Weiterhin wird durch die Isolierflüssigkeit 49 - zusätzlich zu dem erläuterten Abstand - einer Isolation der Kontaktteile 40, 41 zu dem Gehäuse 31 erreicht. Durch die flüssigkeitsdichte Abschirmung des Innenraums der Ausnehmung des Kontaktteils 41 wird erreicht, dass die Isolierflüssigkeit 49 dort nicht vorhanden ist und damit die Hin- und Herbewegung des Gleitkontakts 44 nicht erschweren kann.

In seiner in vertikaler Richtung vorhandenen Oberseite ist an dem Grundkörper 32 ein Ausgleichsraum 50 angebracht. Das Innere des Ausgleichsraums 50 ist mit dem Inneren des Gehäuses 31 verbunden und damit mit der Isolierflüssigkeit 49 zumindest teilweise gefüllt. Der Ausgleichsraum 50 kann oben offen sein, so dass die Isolierflüssigkeit kontrolliert und gegebenenfalls nachgefüllt werden kann. Damit keine Feuchtigkeit eindringen kann, kann am Ausgang des Ausgleichsraums 50 eine Dampfsperre vorgesehen sein. Alternativ kann der Ausgleichsraum 50 auch von einem Balg luftdicht verschlossen sein.

Die Oberfläche des Gehäuses 31 ist mit einer Metallisierung oder einem Leitlack versehen und geerdet.

In den Figuren 3a und 3b ist ein Schaltermodul 60 dargestellt, das in einer elektrischen Schaltanlage, insbesondere in einer Mittelspannungsschaltanlage zur Anwendung kommen kann. Bei dem Schaltermodul 60 handelt es sich um einen einpoligen Dreistellungsschalter, der mit einem einpoligen Leistungsschalter kombiniert ist.

Im Prinzip ist das Schaltermodul 60 der Figuren 3a und 3b aus dem Schaltermodul 10 der Figuren 1a bis 1d und aus dem Schaltermodul 30 der Figuren 2a und 2b zusammengesetzt.

So weist das Schaltermodul 60 der Figuren 3a und 3b ein Gehäuse 61 auf, das aus zwei im wesentlichen zylindrischen Grundkörpern 62, 63 besteht, die etwa parallel zueinander angeordnet sind. Im oberen Grundkörper 62 ist ein Dreistellungsschalter untergebracht, wie er im Zusammenhang mit den Figuren 1a bis 1d erläutert wurde. In der Figur 3a sind die Kontaktteile 20, 21, 23 sowie das Verbindungsteil 24 dieses Dreistellungsschalters schematisch eingezeichnet. Im unteren Grundkörper 63 ist ein Leistungsschalter untergebracht, wie er im Zusammenhang mit den Figuren 2a und 2b erläutert wurde. In der Figur 3a sind die Kontaktteile 40, 41 sowie die Vakuumschaltkammer 42 schematisch eingezeichnet.

Der Abgang 13 des Schaltermoduls 10 der Figuren 1a bis 1d und der Abgang 33 des Schaltermoduls 30 der Figuren 2a und 2b sind bei dem Schaltermodul 60 der Figuren 3a und 3b miteinander verbunden. In diesem Verbindungsbereich ist ein metallischer Leiter 64 vorhanden, der mit dem Kontaktteil 21 des Dreistellungsschalters und mit dem Kontaktteil 41 des Leistungsschalters jeweils verschraubt ist. Es ergibt sich damit eine elektrische Serienschaltung des Dreistellungsschalters und des Leistungsschalters.

Der Dreistellungsschalter und der Leistungsschalter können auf die im Zusammenhang mit den Figuren 1a bis 1d sowie 2a und 2b erläuterte Art und Weise betätigt werden.

Das Innere des Gehäuses 61 ist mit einer Isolierflüssigkeit 65 vollständig gefüllt. Vorzugsweise besitzt die Isolierflüssigkeit 65 eine möglichst hohe Durchschlagsfestigkeit gegen Spannungen, eine niedrige Viskosität, eine geringe Brennbarkeit und eine hohe Verträglichkeit mit den im Inneren des Gehäuses 61 vorhandenen Materialien. Beispielsweise kann als Isolierflüssigkeit 65 Silikonöl oder eine Transformatorenisolierflüssigkeit auf der Basis von synthetischem Ester verwendet werden. Durch die Isolierflüssigkeit 65 wird eine Isolation der Kontaktteile 20, 21, 23 des Dreistellungsschalters zueinander erreicht.

Weiterhin wird durch die Isolierflüssigkeit 65 eine Isolation der Kontaktteile 20, 21, 23 zu dem Gehäuse 61 erreicht. Weiterhin wird durch die Isolierflüssigkeit 65 eine Isolation der Kontaktteile 40, 41 und der Vakuumschaltkammer 42 zu dem Gehäuse 61 erreicht.

In seiner in vertikaler Richtung vorhandenen Oberseite ist an dem oberen Grundkörper 62 ein Ausgleichsraum 66 angebracht. Das Innere des Ausgleichsraums 66 ist mit dem Inneren des Gehäuses 61 verbunden und damit mit der Isolierflüssigkeit 65 zumindest teilweise gefüllt.

Bei den Schaltermodulen 10, 30, 60 der Figuren 1 bis 3 kann die Montage sämtlicher Bauteile des Dreistellungsschalters und/oder des Leistungsschalters durch die Öffnung 15, 35 erfolgen. Nach der Montage kann dann diese Öffnung 15, 35 durch die jeweils zugehörige Platte 22, 45 flüssigkeitsdicht verschlossen werden.

## Patentansprüche

1. Schaltermodul (10, 30, 60) für eine elektrische Schaltanlage, insbesondere für eine Mittelspannungsschaltanlage, mit einem Gehäuse (11, 31, 61), in dem ein Dreistellungsschalter und/oder ein Leistungsschalter untergebracht sind/ist, und das mit einer Isolierflüssigkeit (27, 49, 65) gefüllt ist, **dadurch gekennzeichnet, dass** das Gehäuse (11, 31, 61) aus einem Isolierstoff besteht.

2. Schaltermodul (10, 30, 60) nach Anspruch 1, wobei die metallischen Kontaktteile (20, 21, 23, 40, 41) des Dreistellungsschalters und/oder des Leistungsschalters einen Abstand zu dem Gehäuse (11, 31, 61) aufweisen, und wobei in dem durch den Abstand gebildeten Bereich die Isolierflüssigkeit (27, 49, 65) vorhanden ist.

3. Schaltermodul (10, 30, 60) nach einem der vorstehenden Ansprüche, wobei die metallischen Kontaktteile (20, 21, 23, 40, 41) des Dreistellungsschalters und/oder des Leistungsschalters einen Abstand zueinander aufweisen, und wobei in dem durch den Abstand gebildeten Bereich die Isolierflüssigkeit (27, 49, 65) vorhanden ist.

4. Schaltermodul (10, 30, 60) nach einem der vorstehenden Ansprüche, wobei das Gehäuse (11, 31, 61) mit mindestens einem Abgang (13, 14, 33, 34) versehen ist, in dem ein von außen zugängliches Kontaktstück (18, 19, 38, 39) untergebracht ist, das mit einem der metallischen Kontaktteile (20, 21, 40, 41) des Dreistellungsschalters und/oder des Leistungsschalters elektrisch verbunden ist.

5. Schaltermodul (10, 30, 60) nach einem der vorstehenden Ansprüche, wobei der Dreistellungsschalter und/oder der Leistungsschalter über eine vorzugsweise isolierte Stange (25, 47) betätigbar sind/ist.

6. Schaltermodul (10, 30, 60) nach Anspruch 5, wobei das Gehäuse (11, 31, 61) eine Öffnung aufweist, die von einer Platte (22, 45) flüssigkeitsdicht verschlossen ist, und wobei die Stange (25, 47) flüssigkeitsdicht durch die Platte (22, 45) hindurchgeführt ist.

7. Schaltermodul (10, 60) nach Anspruch 6, wobei die Platte (22) geerdet und mit einem der metallischen Kontaktteile (23) des Dreistellungsschalters elektrisch verbunden ist.

8. Schaltermodul (10, 60) nach einem der Ansprüche 5 bis 7, wobei der Dreistellungsschalter ein metallisches Verbindungsteil (24) aufweist, das mit der Stange (25) gekoppelt ist, und das durch eine Betätigung der Stange (25) mit den elektrischen Kontaktteilen (20, 21, 23) des Dreistellungsschalters in eine elektrische Verbindung bringbar ist.

9. Schaltermodul (30, 60) nach einem der vorstehenden Ansprüche, wobei der Leistungsschalter eine Vakuumschaltkammer (42) aufweist.

10. Schaltermodul (30, 60) nach Anspruch 9, wobei der bewegliche Anschluss der Vakuumschaltkammer (42) mit einem metallischen Gleitkontakt (44) gekoppelt ist, der mit einem der metallischen Kontaktteile (41) des Leistungsschalters elektrisch verbunden ist.

11. Schaltermodul (30, 60) nach Anspruch 10, wobei der Gleitkontakt (44) in einem Innenraum untergebracht ist, in dem keine Isolierflüssigkeit (49, 65) vorhanden ist.

12. Schaltermodul (10, 30, 60) nach einem der vorstehenden Ansprüche, wobei das Gehäuse mit einem Ausgleichsraum (28, 50, 66) für die Isolierflüssigkeit (27, 49, 65) versehen ist, der vorzugsweise mit einer Dampfsperre oder einem Balg verschlossen ist.

13. Schaltermodul (10, 30, 60) nach einem der vorstehenden Ansprüche, wobei die Oberfläche des Gehäuses (11, 31, 61) mit einer Metallisierung oder einem Leitlack versehen und vorzugsweise geerdet ist.
